# FASCICULE DE BREVET EUROPEEN

(11) **EP 2 027 775 B1**
(45) Date de publication et mention de la délivrance du brevet: **07.04.2010**
(21) Numéro de dépôt: 08013635.1
(22) Date de dépôt: 30.07.2008
(51) Int. Cl.: A23B 4/10, A23L 1/00, A23P 1/08

(54) **Procédé de retrait de la couche de protection contre la dessiccation d'une viande séchée, système de mise en oeuvre du procédé et fabrication de jambons secs mettant en oeuvre ledit procédé**
Schrumpfverfahren der Schutzschicht gegen das Austrocknen von luftgetrocknetem Fleisch, System zur Umsetzung dieses Verfahrens und Produktion von luftgetrockneten Schinken, bei der dieses Verfahren zum Einsatz kommt
Method of removing the protective layer against the drying of a dried meat, system for implementing the method and production of dry hams implementing said method

(30) Priorité: 01.08.2007 FR 0756882
(43) Date de publication de la demande: 25.02.2009
(73) Titulaire: ETS PIERRE OTEIZA, 64430 ALDUDES (FR)
(72) Inventeur: Oteiza, Pierre, 64430 Aldudes (FR)
(74) Mandataire: Vannini, Torquato

(56) Documents cités:
- WO-A-2006/056561
- GB-A- 404 871
- GB-A- 1 363 389
- US-A- 3 000 748
- US-A- 5 207 347

## Description

L'invention concerne un procédé et un système de retrait de la couche de protection contre la dessiccation d'une viande séchée. L'invention s'applique à la fabrication de tout produit alimentaire nécessitant une couche de protection contre la dessiccation et en particulier mais non exclusivement, à tout produit carné sec nécessitant une couche de protection contre la dessiccation pendant la phase d'affinage et de séchage.

L'invention s'applique tout particulièrement à la fabrication de jambons secs comprenant une étape de protection de la face charnue, c'est-à-dire de la face sans couenne, avant la phase d'affinage.

Dans la fabrication des jambons secs, la couche de protection est enduite sur la face charnue du jambon. En général cette couche de protection est constituée d'un mélange à base de graisse, On parle classiquement dans le domaine de l'industrie agroalimentaire de « pannage » du jambon pour l'étape de mise en place de la couche de protection et de dégraissage pour le retrait de cette couche.

On rappelle que le procédé de fabrication d'un jambon sec comprend à titre d'exemple les phases suivante
- une phase de salage du jambon cru après sa découpe,
- une phase de repos à basse température (par exemple 2°C),
- une phase d'étuvage optionnelle réalisée à haute température (par exemple 25°C),
- une phase de séchage à température et hygrométrie contrôlées, la température sera plus élevée si l'étuvage n'a pas eu lieu,
- une étape d'application d'une couche de protection contre la dessiccation excessive;
- une étape d'affinage à température ambiante ;
- une étape de retrait de la couche de protection contre la dessiccation ;
- et éventuellement une étape de désossage avant conditionnement pour la vente.

L'étape de mise en place de la couche de protection pendant la période de séchage a pour but de ralentir la dessiccation en surface de la face charnue du jambon afin de réduire et même de supprimer la formation de croûte. Le mélange utilisé pour former la couche de protection crée une barrière étanche sur la face charnue du jambon et ralentit son séchage en favorisant les échanges à l'intérieur du jambon plutôt que entre le jambon et le milieu extérieur.

L'étape de retrait de la couche de protection est indispensable car après 4 à 12 mois d'affinage du jambon la couche s'est oxydée et présente un goût de rance désagréable.

Jusqu'à ce jour, deux techniques sont utilisées pour retirer cette couche. La première technique consiste à racler manuellement la surface du jambon. On utilise cette technique en particulier pour traiter des petites quantités de jambon, par exemple jusqu'à une centaine de jambons par jour. La technique demeure imparfaite, des résidus du mélange peuvent subsister et donner un mauvais goût. En outre la technique est longue et coûteuse en main d'oeuvre.

La deuxième technique consiste à effectuer un lavage au jet d'eau moyenne pression. Cette technique est appliquée préférentiellement pour des quantités plus importantes soit au-delà de 100 jambons par jour. Cette technique est plus efficace mais présente néanmoins de nombreux inconvénients. En effet, cette technique conduit à réintroduire de l'eau sur un produit sec ce qui peut être néfaste en cas d'imbibition et nécessite une étape de séchage. En outre cette technique est très consommatrice en eau et nécessite un traitement des eaux usées en particulier une séparation eau/graisse.

La présente invention a pour but de remédier à ces inconvénients.

WO 2006/056561 concerne un revêtement pelable comprenant une dispersion de polymère (une ou plus) ou un polymère (une ou plusieurs) copolymère et un procédé d'application et de retrait de cette couche.

La présente invention a pour objet un procédé de retrait de la couche de protection contre la dessiccation d'un produit alimentaire, principalement caractérisé en ce qu'il comprend une opération de fonte la couche de protection par chauffage avec insufflation d'un gaz sous pression.

Le gaz utilisé est avantageusement de l'air. Il peut s'agir également d'une vapeur sèche.

Le produit alimentaire peut être une viande séchée. Il peut s'agir de jambons secs.

Selon un mode de réalisation, le chauffage est réalisé par exposition de la face recouverte par la couche de protection devant une source de chaleur.

Le chauffage est réalisé par une source de chaleur qui émet un rayonnement devant la face recouverte de la couche de protection, à une température apte à provoquer la fonte de cette dernière, l'insufflation de gaz (air ou vapeur sèche) est réalisée après fonte au moyen d'un gaz sous pression afin de nettoyer et d'assécher la surface après fonte.

Le gaz sous pression peut être un gaz froid ou chaud par exemple de l'air froid ou de l'air chaud.

Selon un autre mode de réalisation, le chauffage est réalisé par insufflation d'un gaz chaud sous pression.

Dans le cas d'une viande séchée, l'opération de chauffage est réalisée sur une viande séchée placée verticalement devant la source de chaleur de manière à faciliter le ruissèlement de la couche de protection fondue.

L'insufflation d'air est faite sous une pression comprise entre 3 et 10 bars par exemple 5 bars.

L'invention a également pour objet un système de retrait de la couche de protection contre la dessiccation d'un produit alimentaire principalement caractérisé en ce qu'il comprend des moyens de chauffage avec insufflation d'un gaz sous pression pour provoquer la fonte de la couche de protection et le nettoyage avec assèchement de la surface après fonte.

Les moyens de chauffage avec insufflation de gaz sous pression comprennent une ou plusieurs sources de chaleur émettant un rayonnement en direction de la face recouverte de la couche de protection et une ou plusieurs buses de soufflage de gaz comprimé.

Les moyens de chauffage avec insufflation de gaz comprennent un ou plusieurs ensembles de buses d'insufflation de gaz chaud comprimé.

Le gaz est avantageusement de l'air comprimé. Il peut également s'agir d'une vapeur sèche sous pression.

Dans le cas de l'utilisation du système à une pièce de viande séchée, le système comprend en outre un dispositif de convoyage muni de bâtis alignés sur chacun des quels peut être accroché une pièce de viande séchée comprenant une face recouverte de la couche de protection, les moyens de chauffage avec insufflation d'air étant disposés face aux pièces de viande qui défilent.

Le système comprend en outre une ou plusieurs cellules de détection du passage d'une pièce de viande pour déclencher l'insufflation de gaz sous pression (d'air ou de vapeur sèche).

Dans un exemple de réalisation, le système de convoyage est linéaire.

Dans un autre mode de réalisation, le système de convoyage se présente sous la forme d'un carrousel.

L'invention concerne également l'application du procédé à la fabrication du jambon sec, l'étape de retrait de la couche de protection contre la dessiccation est mise en oeuvre à la fin de la période d'affinage.

D'autres particularités et avantages de l'invention apparaîtront clairement à la lecture de la description qui est faite ci-après et qui est donnée à titre d'exemple illustratif et non limitatif et en regard des figures sur lesquelles :
La figure 1 représente le schéma d'un système de mise en oeuvre du procédé selon l'invention vue de face,
La figure 2 représente le schéma du système selon un mode de réalisation en vue de dessus,
La figure 3 représente le schéma du système selon un deuxième mode de réalisation en vue de dessus,
La figure 4 représente le schéma d'un exemple de réalisation d'un dispositif d'insufflation d'air comprimé selon les figures 2 ou 3,
La figure 5 représente le schéma d'un système de mise en oeuvre du procédé dans une variante de réalisation,
La figure 6 représente le schéma de la source de chaleur de la figure 2, vue de côté.

La description qui est faite ci après est donnée à titre d'exemple dans l'application de fabrication de jambons secs. Comme cela a été décrit précédemment, la mise en oeuvre du procédé de retrait de la couche de protection mise en place avant l'affinage des jambons est réalisée à la fin de cette période.

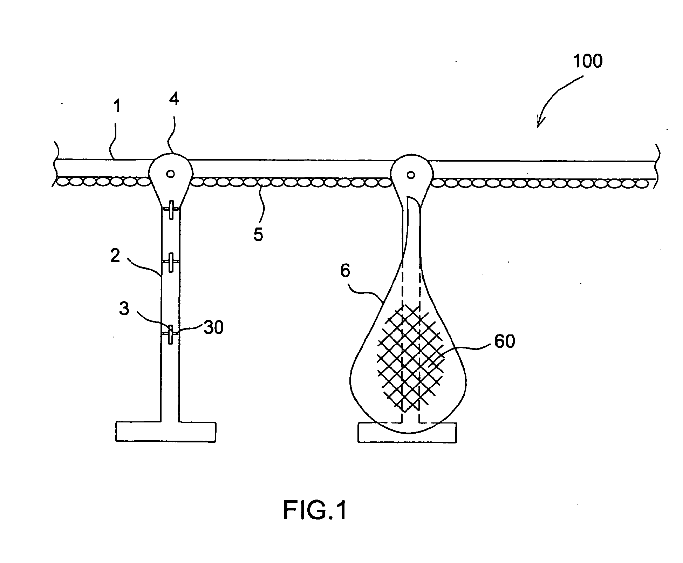

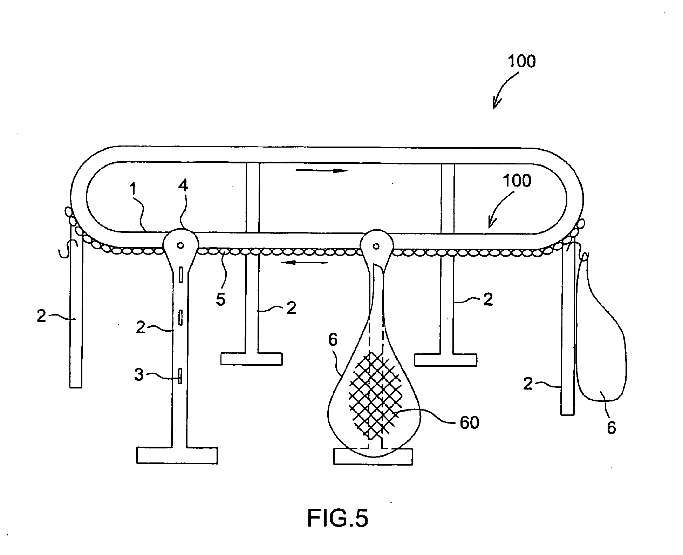

Pour permettre un traitement en série, les jambons sont mis en place sur un dispositif de convoyage 100. Deux exemples de réalisation d'un tel dispositif sont illustrés respectivement sur les figures 1 et 5. La figure 1 illustre un dispositif linéaire, tandis que la figure 5 illustre un dispositif circulaire de type carrousel. Les motorisations sont classiques et non représentées sur ces figures. Il est prévu de choisir une motorisation qui permette une régulation de vitesse afin d'avoir la possibilité de faire varier le temps de passage dans la zone de chauffage.

Selon un exemple de réalisation, le dispositif de convoyage 100 comporte un rail 1, des poulies 4 (avec roue 7) se déplaçant sur le rail 1 grâce à un mécanisme d'entrainement 5. Des bâtis 2 verticaux, c'est-à-dire perpendiculaires au rail de convoyage 1, sont fixés sur les poulies 4. Les bâtis 1 sont alignés en parallèle, chaque bâti 1 est associé à une poulie 4. Un jambon 6 est accroché sur chaque bâti 4. Les bâtis comprennent pour cela une série de trous 30 alignés aptes à recevoir des crochets 3 pour l'accrochage des jambons 6. Le réglage de la hauteur d'accrochage est obtenu par le choix du trou 30 dans lequel le crochet 3 est mis en place. Ce réglage de hauteur est utile lorsque l'on passe à des jambons de taille différente dans la mesure où le dispositif de chauffage est à une hauteur fixe.

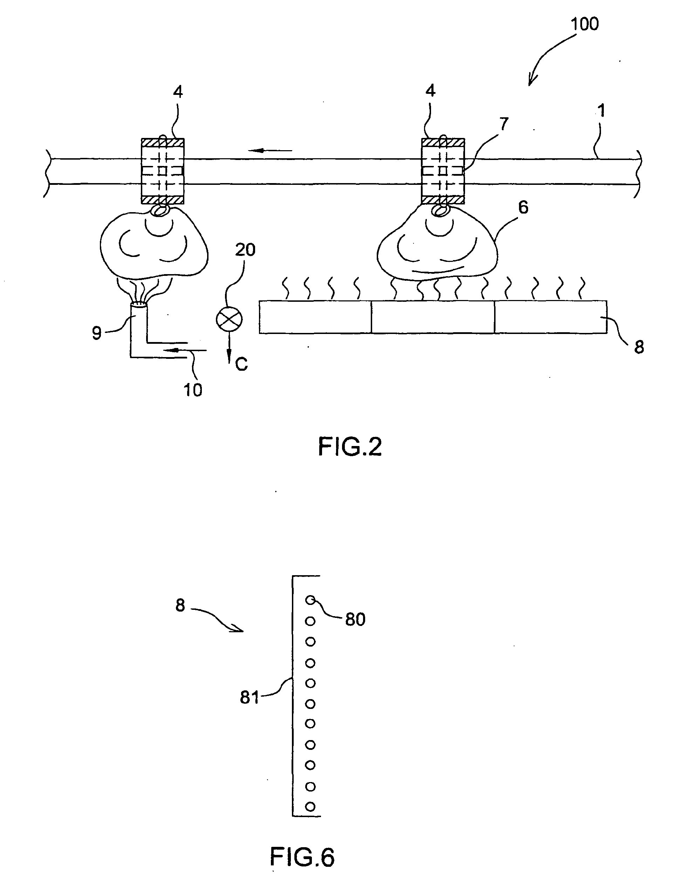

La figure 2 permet d'illustrer une source de rayonnement de chaleur 8 selon une vue de dessus. Cette source 8 est apte à provoquer la fonte de la couche de protection 60 lorsque le jambon 6 se trouve en face. Les jambons 6 peuvent être arrêtés quelques secondes devant la source rayonnement de chaleur 8 ou passer à très faible vitesse. Un dispositif d'insufflation d'air comprimé est réalisé par une buse 9 de soufflage (ou plusieurs buses) d'air comprimé 10. Ce dispositif 9 est disposé après le passage devant la source de chaleur 8.

De façon pratique on utilise comme dispositif d'insufflation plusieurs buses 9. Ces buses sont disposées par exemple en rangée. La hauteur de la rangée de buses peut éventuellement être réglable devant le passage des jambons. Chaque buse 9 comprend une arrivée d'air comprimé 10 raccordée à un distributeur non représenté. Il peut s'agir d'une arrivée d'air froid ou d'air chaud.

L'insufflation d'air est déclenchée par exemple par détection du passage d'un jambon 6 devant une cellule de détection 20 qui envoie un signal électrique C utilisé pour la commande de déclenchement d'arrivée d'air 10 (commande du distributeur).

La figure 6 illustre la source de chaleur 8 selon une vue de côté. A titre d'exemple la source 8 est composée d'un châssis 81 abritant un ensemble de barres de rayonnement infrarouge 80. Le châssis est par exemple en aluminium. L'ensemble 8 peut fournir par exemple une puissance de 4,5 kW. Il est prévu de choisir un dispositif qui permette de faire varier la puissance de chauffage.

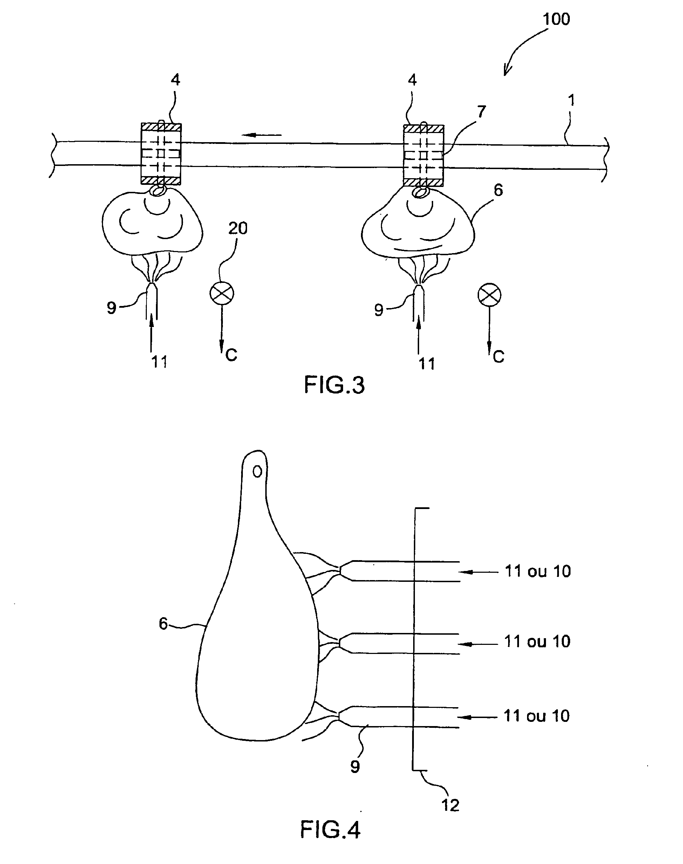

La figure 3 illustre un deuxième mode de réalisation du système. Dans ce mode de réalisation, le dispositif de chauffage et d'insufflation d'air comprimé est réalisé par un même élément à savoir une buse 9 d'insufflation d'air comprimé chaud 11 . La température de l'air est suffisante pour faire fondre la couche de protection 60.

De façon pratique, et à titre d'exemple, le dispositif peut comprendre un ou deux ensembles de buses 9 d'insufflation d'air chaud comprimé distants de manière à agir sur deux jambons en même temps et insufflation deux fois sur le même jambon.

Dans les deux exemples de réalisation, figure 2 et figure 3, l'insufflation d'air comprimé peut être obtenu par une rangée de buses 9 portées par un châssis 12 comme illustré par le schéma de la figure 4.

La figure 5 illustre la deuxième variante de réalisation pour le système de convoyage 100. Dans cette variante, le système n'est pas linéaire comme dans l'exemple des figures 1, 2, 3 mais circulaire. Le système se présente sous forme d'un carrousel.

## Revendications

1. Procédé de retrait de la couche de protection contre la dessiccation d'un produit alimentaire, **caractérisé en ce qu'**il comprend une opération de fonte de la couche de protection par chauffage avec insufflation d'un gaz sous pression.

2. Procédé de retrait selon la revendication 1, **caractérisé en ce que** le chauffage est réalisé par exposition de la face du produit alimentaire, recouverte par la couche de protection devant une source de chaleur.

3. Procédé de retrait selon la revendication 2, **caractérisé en ce que** le chauffage est réalisé par une source de chaleur qui émet un rayonnement devant la face recouverte de la couche de protection, à une température apte à provoquer la fonte de cette dernière, l'insufflation de gaz est réalisée après fonte au moyen d'un gaz sous pression afin de nettoyer et d'assécher la surface après fonte.

4. Procédé de retrait selon la revendication 1, **caractérisé en ce que** le chauffage est réalisé par insufflation d'un gaz chaud sous pression.

5. Procédé de retrait selon l'une quelconque des revendication précédentes, **caractérisé en ce que** le gaz est de l'air.

6. Procédé de retrait selon l'une quelconque des revendications précédentes, **caractérisé en ce que** le produit alimentaire est une viande séchée.

7. Système de retrait de la couche de protection contre la dessiccation d'un produit alimentaire, **caractérisé en ce qu'**il comprend des moyens de chauffage avec insufflation de gaz sous pression (air ou vapeur sèche) pour provoquer la fonte de la couche de protection et le nettoyage avec assèchement de la surface après fonte.

8. Système de retrait selon la revendication 7, **caractérisé en ce que** les moyens de chauffage avec insufflation de gaz comprennent une ou plusieurs sources de chaleur émettant un rayonnement en direction de la face recouverte de la couche de protection et une ou plusieurs buses de soufflage de gaz comprimé.

9. Système de retrait selon la revendication 7, **caractérisé en ce que** les moyens de chauffage avec insufflation de gaz, comprennent un ou plusieurs ensembles de buses d'insufflation de gaz chaud comprimé.

10. Système de retrait selon les revendications 7 à 9 selon lequel le produit alimentaire est une pièce de viande séchée, **caractérisé en ce qu'**il comprend en outre un dispositif de convoyage muni de bâtis alignés sur chacun des quels peut être accroché une pièce de viande séchée comprenant une face recouverte de la couche de protection, les moyens de chauffage avec insufflation de gaz étant disposés face aux pièces de viande qui défilent.

11. Système de retrait selon la revendication 10, **caractérisé en ce qu'**il comprend en outre une ou plusieurs cellules de détection du passage d'une pièce de viande pour déclencher l'insufflation d'air sous pression.

12. Système de retrait selon l'une quelconque des revendications 7 à 11, **caractérisé en ce que** le gaz est de l'air.

13. Application du procédé selon l'une quelconque des revendications 1 à 6 et du système selon l'une quelconques des revendications 7 à 12, à la fabrication du jambon sec, l'étape de retrait de la couche de protection contre la dessiccation étant mise en oeuvre à la fin de la période d'affinage du jambon.

## Claims

1. A method for removing the protective layer against desiccation of a food product, **characterized in that** it comprises an operation for melting the protective layer by heating with insufflation of a pressurized gas.

2. The removal method according to claim 1, **characterized in that** the heating is carried out by exposing the face of the food product, covered by the protective layer in front of a source of heat.

3. The removal method according to claim 2, **characterized in that** heating is achieved by a source of heat which emits radiation in front of the face covered with the protective layer, at a temperature capable of causing melting of the latter, gas insufflation is carried out after melting by means of a pressurized gas in order to clean and dry the surface after melting.

4. The removal method according to claim 1, **characterized in that** heating is achieved by insufflation of a hot pressurized gas.

5. The removal method according to any of the preceding claims, **characterized in that** the gas is air.

6. The removal method according to any of the preceding claims, **characterized in that** the food product is dried meat.

7. A system for removing the protective layer against desiccation of a food product, **characterized in that** it comprises heating means with insufflation of pressurized gas (air or dry vapor) in order to cause melting of the protective layer and cleaning with drying of the surface after melting.

8. The removal method according to claim 7, **characterized in that** the heating means with gas insufflation comprise one or more sources of heat emitting radiation towards the face covered with the protective layer and one or more nozzles for blowing compressed gas.

9. The removal method according to claim 7, **characterized in that** the heating means with gas insufflation comprise one or more sets of nozzles for insufflation of hot compressed gas.

10. The removal method according to claims 7 to 9, according to which the food product is a piece of dried meat, **characterized in that** it further comprises a conveying device provided with aligned frames on each of which may be hung a piece of dried meat comprising a face covered with the protective layer, the heating means with gas insufflations being positioned in front of the meat pieces which pass by.

11. The removal method according to claim 10, **characterized in that** it further comprises one or more cells for detecting the passage of a meat piece in order to trigger the insufflation of pressurized air.

12. The removal method according to any claims 7 to 11, **characterized in that** the gas is air.

13. The application of the method according to any of claims 1 to 6 and of the system according to any of claims 7 to 12, for producing dry ham, the step for removing the protective layer against desiccation being applied at the end of the refining period of the ham.

## Patentansprüche

1. Verfahren zum Entfernen der Schicht zum Schutz gegen Austrocknen eines Lebensmittels, **dadurch gekennzeichnet, dass** es einen Vorgang des Schmelzens der Schutzschicht durch Erwärmen mit Blasen eines Gases unter Druck umfasst.

2. Verfahren zum Entfernen nach Anspruch 1, **dadurch gekennzeichnet, dass** das Erwärmen durch Aussetzen der Seite des Lebensmittels, die mit der Schutzschicht bedeckt ist, vor einer Wärmequelle durchgeführt wird.

3. Verfahren zum Entfernen nach Anspruch 2, **dadurch gekennzeichnet, dass** das Erwärmen durch eine Wärmequelle durchgeführt wird, die vor der mit der Schutzschicht bedeckten Seite eine Strahlung abgibt mit einer Temperatur, die imstande ist, das Schmelzen derselben hervorzurufen, wobei das Blasen von Gas nach dem Schmelzen mit einem Gas unter Druck durchgeführt wird, um die Oberfläche nach dem Schmelzen zu reinigen und zu trocknen.

4. Verfahren zum Entfernen nach Anspruch 1, **dadurch gekennzeichnet, dass** das Erwärmen durch Blasen eines Heißgases unter Druck durchgeführt wird.

5. Verfahren zum Entfernen nach einem der vorangehenden Ansprüche, **dadurch gekennzeichnet, dass** das Gas Luft ist.

6. Verfahren zum Entfernen nach einem der vorangehenden Ansprüche, **dadurch gekennzeichnet, dass** das Lebensmittel ein getrocknetes Fleisch ist.

7. System zum Entfernen der Schicht zum Schutz gegen Austrocknen eines Lebensmittels, **dadurch gekennzeichnet, dass** es Heizmittel mit Blasen von Gas unter Druck (Luft oder Trockendampf) umfasst, um das Schmelzen der Schutzschicht und die Reinigung mit Trocknung der Oberfläche nach dem Schmelzen zu veranlassen.

8. System zum Entfernen nach Anspruch 7, **dadurch gekennzeichnet, dass** die Heizmittel mit Blasen von Gas eine oder mehrere Wärmequellen umfassen, die eine Strahlung in Richtung der mit der Schutzschicht bedeckten Seite abgeben und eine oder mehrere Düsen zum Blasen von komprimiertem Gas.

9. System zum Entfernen nach Anspruch 7, **dadurch gekennzeichnet, dass** die Heizmittel mit Blasen von Gas eine oder mehrere Düsengruppen zum Blasen von komprimiertem Heißgas umfassen.

10. System zum Entfernen nach den Ansprüchen 7 bis 9, wobei das Lebensmittel ein Stück getrocknetes Fleisch ist, **dadurch gekennzeichnet, dass** es weiterhin eine Fördervorrichtung mit fluchtrechten Gestellen umfasst, auf denen ein Stück getrocknetes Fleisch befestigbar ist, das eine mit der Schutzschicht bedeckten Seite umfasst, wobei die Heizmittel mit Blasen von Gas gegenüber den vorbeiziehenden Fleischstücken angeordnet sind.

11. System zum Entfernen nach Anspruch 10, **dadurch gekennzeichnet, dass** es weiterhin eine oder mehrere Zellen zum Erfassen des Vorbeiziehens eines Stücks Fleisch umfasst, um das Blasen von Luft unter Druck auszulösen.

12. System zum Entfernen nach einem der Ansprüche 7 bis 11, **dadurch gekennzeichnet, dass** das Gas Luft ist.

13. Anwendung des Verfahrens nach einem der Ansprüche 1 bis 6 und des Systems nach einem der Ansprüche 7 bis 12 zur Herstellung von Trockenschinken, wobei der Schritt des Entfernens der Schutzschicht gegen Austrocknen am Ende der Veredelungsperiode des Schinkens umgesetzt wird.
